# EUROPEAN PATENT APPLICATION

(11) **EP 4 383 847 A1**
(43) Date of publication of application: **12.06.2024**
(21) Application number: 21952832.0
(22) Date of filing: 05.08.2021
(51) Int. Cl.: H04W 56/00

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); KURITA, Daisuke, Tokyo 100-6150 (JP); NAGATA, Satoshi, Tokyo 100-6150 (JP); LIU, Wenjia, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/029231
(87) International publication number: WO 2023/013008

(57) **Abstract**

A terminal includes: a reception unit configured to receive a parameter related to a TA (Timing Advance) common to all users in a base station included in an NTN (Non-Terrestrial Network) and a TA command from the base station; and a control unit configured to calculate a common TA, based on the parameter, and to perform uplink synchronization, based on the TA command, the calculated common TA, a device-specific TA, and an offset. The reception unit receives the parameter at a period via at least one of SIB (System Information Block), RRC (Radio Resource Control) signaling, MAC-CE (Medium Access Control - Control Element) and DCI (Downlink Control Information).

## Description

### FIELD OF THE INVENTION

The present invention relates to a terminal and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

Currently, NTN (Non-Terrestrial Network) is also discussed. The NTN provides services to an area that cannot be covered by a terrestrial 5G network mainly due to the cost aspect, by using a non-terrestrial network such as a satellite (Non-Patent Document 2 and Non-Patent Document 3).

### Citation List

### Non-Patent Document

Non-Patent Document 1: 3GPP TS 38.300 V16.6.0 (2021-06)
Non-Patent Document 2: 3GPP TR 38.821 V16.0.0 (2019-12)
Non-Patent Document 3: Konishi, et al., "A Study of Downlink Spectrum Sharing in HAPS Mobile Communication System", the Institute of Electronics, Information and Communication Engineers (IEICE) General Conference, B-17-1, 2020

### SUMMARY OF THE INVENTION

### TECHNICAL PROBLEM

In NTN, because the distance between the base station in the air and the terminal is very large, the propagation delay becomes greater as compared with the terrestrial network, TN. In addition, in NTN, because communications are performed via the feeder link and the service link, the TA (Timing Advance) becomes very large as compared with that of the conventional terrestrial network, and thus, a configuration in which the propagation delay is taken into account is required.

The present invention has been made in view of the above points, and it is an object of the present invention to appropriately configure the TA (Timing Advance) in the wireless communication system.

### SOLUTION TO PROBLEM

According to the disclosed technique, a terminal is provided. The terminal includes: a reception unit configured to receive a parameter related to a TA (Timing Advance) common to all users in a base station included in an NTN (Non-Terrestrial Network) and a TA command from the base station; and a control unit configured to calculate a common TA, based on the parameter, and to perform uplink synchronization, based on the TA command, the calculated common TA, a device-specific TA, and an offset. The reception unit receives the parameter at a period via at least one of SIB (System Information Block), RRC (Radio Resource Control) signaling, MAC-CE (Medium Access Control - Control Element) and DCI (Downlink Control Information).

### ADVANTAGEOUS EFFECTS OF INVENTION

According to an embodiment of the present invention, it is possible to appropriately configure the TA (Timing Advance) in the wireless communication system.

### BRIEF DESCRIPTION OF THE DRAWINGS

[Fig. 1] is a drawing illustrating an example (1) of an NTN.
[Fig. 2] is a drawing illustrating an example (2) of an NTN.
[Fig. 3] is a drawing illustrating an example (3) of an NTN.
[Fig. 4] is a drawing illustrating an example (4) of an NTN.
[Fig. 5] is a drawing illustrating an example (1) of a synchronization procedure.
[Fig. 6] is a drawing illustrating an example (2) of a synchronization procedure.
[Fig. 7] is a drawing illustrating an example of a timing advance.
[Fig. 8] is a drawing for describing an example of a timing advance in an NTN.
[Fig. 9] is a sequence diagram illustrating an example of synchronization in an embodiment of the present invention.
[Fig. 10] is a sequence diagram illustrating an example of updating a TA in an embodiment of the present invention.
[Fig. 11] is a drawing illustrating the relationship between the TA broadcasting periodicity and the TA error.
[Fig. 12] is a sequence diagram illustrating an example (1) of configuring a TA in an embodiment of the present invention.
[Fig. 13] is a sequence diagram illustrating an example (2) of configuring a TA in an embodiment of the present invention.
[Fig. 14] is a sequence diagram illustrating an example (3) of configuring a TA in an embodiment of the present invention.
[Fig. 15] is a sequence diagram illustrating an example (4) of configuring a TA in an embodiment of the present invention.
[Fig. 16] is a sequence diagram illustrating an example (5) of configuring a TA in an embodiment of the present invention.
[Fig. 17] is a sequence diagram illustrating an example (6) of configuring a TA in an embodiment of the present invention.
[Fig. 18] is a sequence diagram illustrating an example (7) of configuring a TA in an embodiment of the present invention.
[Fig. 19] is a sequence diagram illustrating an example (8) of configuring a TA in an embodiment of the present invention.
[Fig. 20] is a drawing illustrating an example (1) of the TA broadcasting periodicity in an embodiment of the present invention.
[Fig. 21] is a drawing illustrating an example (2) of the TA broadcasting periodicity in an embodiment of the present invention.
[Fig. 22] is a drawing illustrating an example (3) of the TA broadcasting periodicity in an embodiment of the present invention.
[Fig. 23] is a drawing illustrating an example (4) of the TA broadcasting periodicity in an embodiment of the present invention.
[Fig. 24] is a drawing illustrating a relationship (1) between the granularity of configuring a TA and the TA error.
[Fig. 25] is a drawing illustrating a relationship (2) between the granularity of configuring a TA and the TA error.
[Fig. 26] is a drawing illustrating an example of changing the granularity of configuring a TA in an embodiment of the present invention.
[Fig. 27] is a drawing illustrating an example of a functional structure of a base station 10 in an embodiment of the present invention.
[Fig. 28] is a drawing illustrating an example of a functional structure of a terminal 20 in an embodiment of the present invention.
[Fig. 29] is a drawing illustrating an example of a hardware structure of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, the above terms in NR correspond to NR-SS, NR-PSS, NR-SSS, NR-PBCH, NR-PRACH, NR-PDCCH, NR-PDSCH, NR-PUCCH, NR-PUSCH, and the like. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

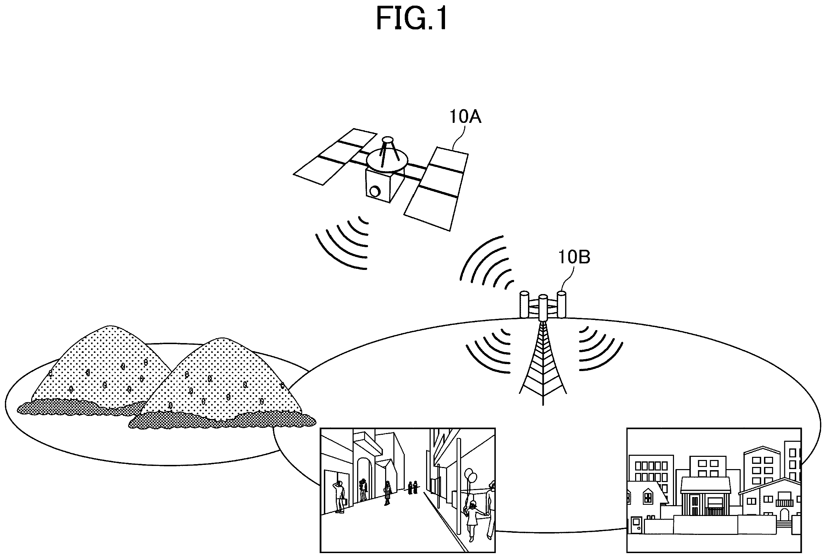

Fig. 1 is a drawing illustrating an example (1) of NTN. The NTN provides services to an area that cannot be covered by a terrestrial 5G network mainly due to the cost aspect, by using a non-terrestrial apparatus such as a satellite. Further, services with higher reliability may be provided by NTN. For example, NTN may be assumed to be applied to IoT (Inter of things), ships, buses, trains, and critical communications. Further, NTN has scalability according to efficient multi-cast or broadcast.

As an example of NTN, as illustrated in Fig. 1, a satellite 10A can provide services to an area such as a mountainous area for which a terrestrial base station is not arranged, by performing retransmission of a signal transmitted by a terrestrial base station 10B.

Note that the terrestrial 5G network may have a structure as described below. The terrestrial 5G network may include one or more base stations 10 and terminals 20. The base station 10 is a communication device that provides one or more cells and performs wireless communication with the terminal 20. Physical resources of the radio signal may be defined in the time domain and the frequency domain, the time domain may be defined by the number of OFDM symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, a NR-PBCH, and may be referred to as broadcast information.

The base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, both the base station 10 and terminal 20 may perform communications via an SCell (Secondary Cell) and a PCell (Primary Cell) using CA (Carrier Aggregation).

The terminal 20 may be a communication apparatus that includes a wireless communication function such as a smart-phone, a mobile phone, a tablet, a wearable terminal, a communication module for M2M (Machine-to-Machine), or the like. The terminal 20 uses various communication services provided by a wireless communication system, by receiving a control signal or data in DL from the base station 10 and transmitting a control signal or data in UL to the base station 10.

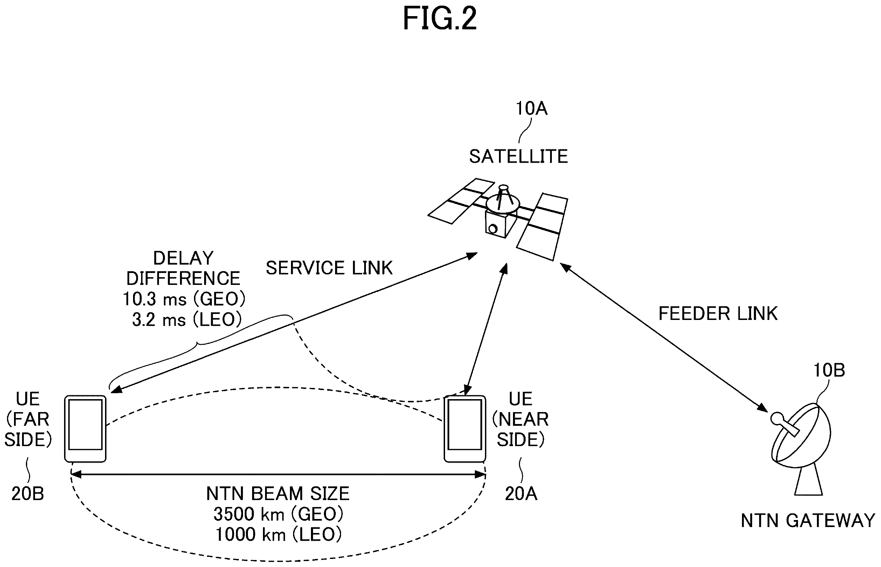

Fig. 2 is a drawing illustrating an example (2) of NTN. In NTN, a cell or an area for each beam is very large when compared with a terrestrial network, TN. Fig. 2 illustrates an example of NTN including retransmissions by a satellite. The connection between a satellite 10A and an NTN gateway 10B is referred to as a feeder link, and the connection between the satellite 10A and a UE 20 is referred to as a service link.

As illustrated in Fig. 2, the delay difference between the near side UE 20A and the far side UE 20B is, for example, 10.3 ms in a case of GEO (Geosynchronous orbit), and 3.2 ms in a case of LEO (Low Earth orbit). Further, the beam size in NTN is, for example, 3500 km in a case of GEO, and 1000 km in a case of LEO.

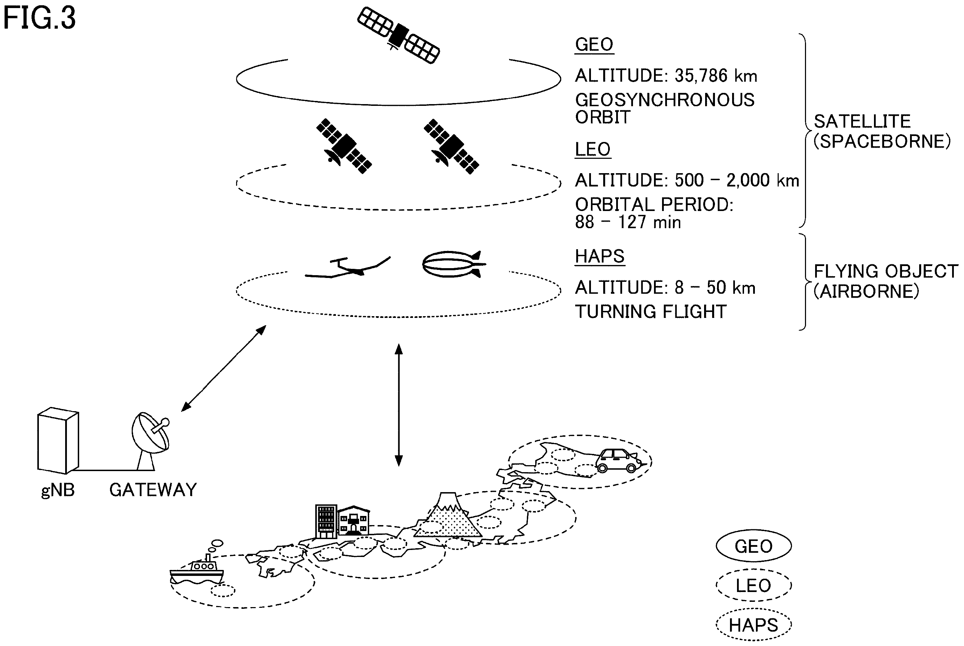

Fig. 3 is a drawing illustrating an example (3) of NTN. As illustrated in Fig. 3, NTN is implemented by a satellite in space or a flying object in the air. For example, the GEO satellite may be a satellite located at altitude 35,786 km, with a geosynchronous orbit. For example, the LEO satellite may be a satellite located at altitude 500 to 2000 km, with a turning flight of a period of 88 to 127 minutes. For example, HAPS (High Altitude Platform Station) may be a flying object located at altitude 8 to 50 km, with a turning flight.

As illustrated in Fig. 3, the GEO satellite, the LEO satellite and the HAPS flying object may be connected to a terrestrial station gNB via a gateway. In addition, the service area increases in the order of HAPS, LEO, and GEO.

For example, the coverage of the 5G network can be enhanced by NTN, with respect to the area with no service and the area with services. In addition, for example, the continuity, availability, and reliability of services in a ship, bus, train or other important communications can be improved by NTN. Note that NTN may be indicated by transmitting a dedicated parameter to the terminal 20, and the dedicated parameter may be, for example, a parameter related to TA (Timing Advance) determination based on the information related to the satellite or the flying object.

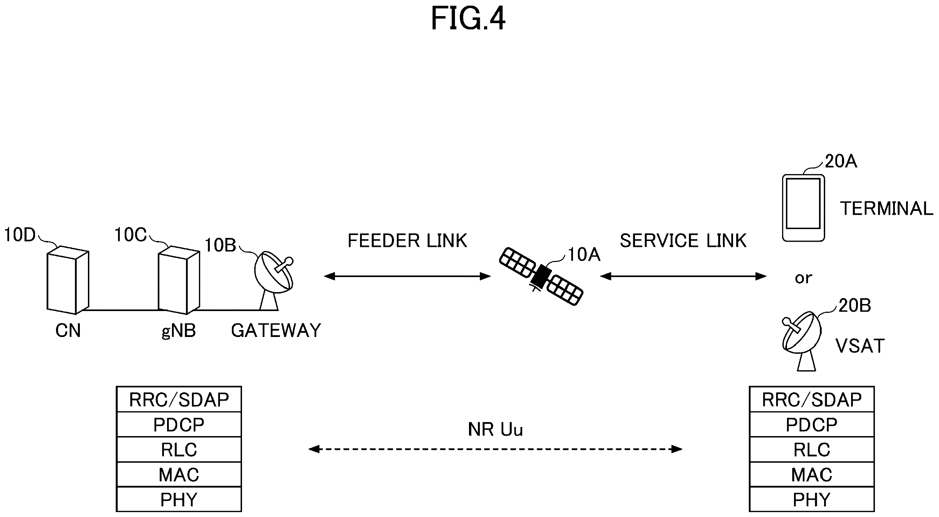

Fig. 4 is a drawing illustrating an example (4) of NTN. Fig. 4 illustrates an example of an NTN network architecture that is assumed in a case of transparent payload. As illustrated in Fig. 4, a CN (Core Network) 10D, a gNB 10C and a gateway 10B are connected. The gateway 10B is connected to a satellite 10A via a feeder link. The satellite 10A is connected to a terminal 20A or a VSAT (Very small aperture terminal) 20B via a service link. NR Uu is established between the gNB 10C and the terminal 20A or VSAT 20B.

In addition, as an assumption of the NTN network architecture, FDD may be adopted, or TDD may be available. In addition, the terrestrial cell may be fixed or movable. In addition, the terminal 20 may have GNSS (Global Navigation Satellite System) capability. For example, in FR1, a hand-held device with power class 3 may be assumed. In addition, a VSAT device may be assumed at least in FR2.

In addition, a regenerative payload may be assumed in the NTN network architecture. For example, a gNB function may be installed in the satellite or the flying object. In addition, a gNB-DU may be installed in the satellite or the flying object, and a gNB-CU may be arranged as a terrestrial station.

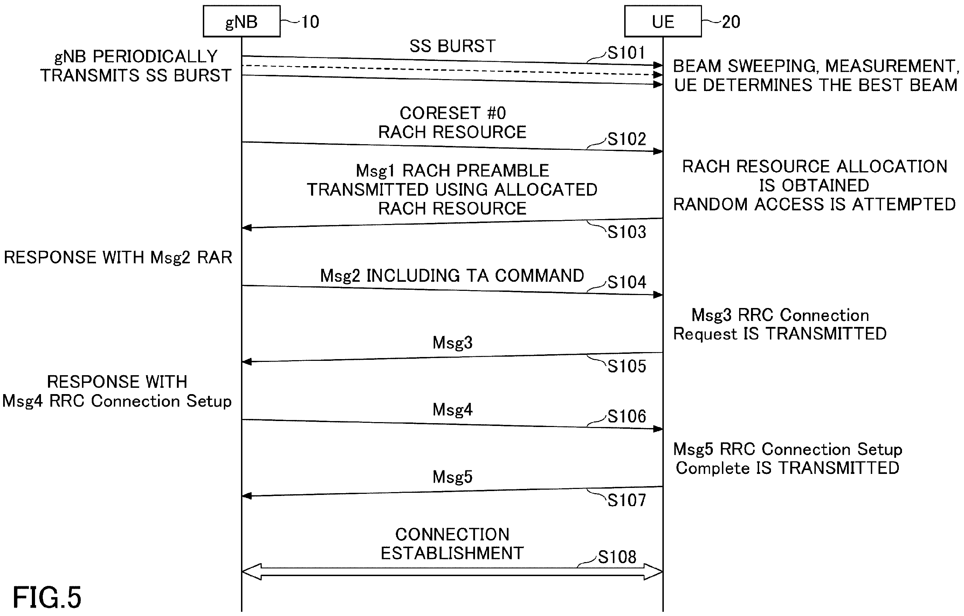

Fig. 5 is a drawing illustrating an example (1) of a synchronization procedure. The conventional synchronization procedure will be described by using Fig. 5. In step S101, a gNB 10 periodically transmits an SS burst to a UE 20. The UE 20 performs beam sweeping and measurement, and determines the best beam. In step S102, the gNB 10 transmits CORESET #0 and information indicating RACH resources that is received based on the CORESET #0 to the UE 20. In step S103, the UE 20 transmits, to the gNB 10, a RACH preamble as Msg1 by using the allocated RACH resource.

In step S104, the gNB 10 transmits, to the UE 20, an RAR (Random Access Response) as Msg2 including a TA command. The TA command is indicated by MAC-CE (Medium Access Control - Control Element) and is used for UL time synchronization. In step S105, the UE 20 transmits, to the gNB 10, RRC Connection Request as MSg3. In step S106, the gNB 10 transmits, to the UE 20, RRC Connection Setup as Msg4. In step S107, the UE 20 transmits, to the gNB 10, RRC Connection Complete as Msg5. In step S108, the gNB 10 and the UE 20 establish the connection.

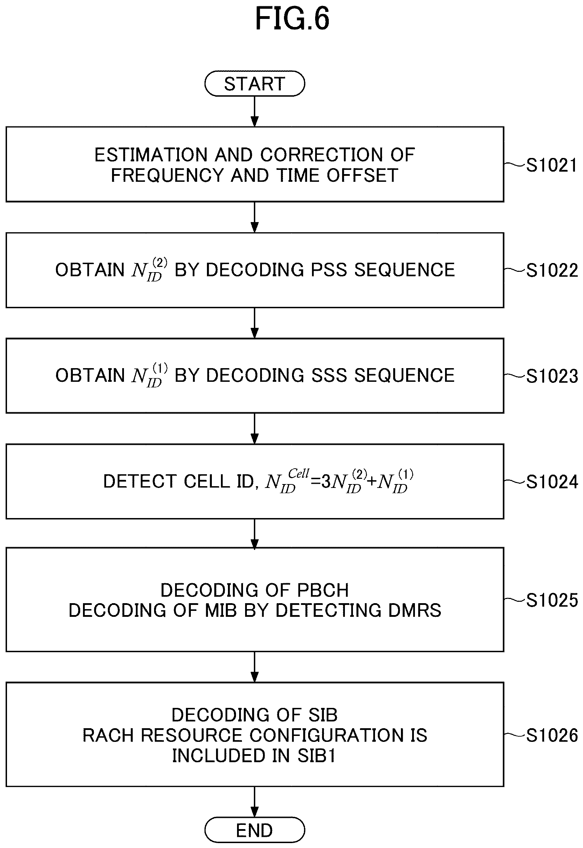

Fig. 6 is a drawing illustrating an example (2) of a synchronization procedure. The step S102 that is an operation of the UE 20 will be described in detail by using Fig. 6. In step S1021, the UE 20 performs estimation and correction of the frequency and time offset. In subsequent step S1022, the UE 20 obtains N⁽²⁾_{ID} by decoding the PSS sequence. In subsequent step S1023, the UE 20 obtains N⁽¹⁾_{ID} by decoding the SSS sequence. In subsequent step S1024, the UE 20 detects a cell ID, N^{Cell}_{ID}=3N⁽²⁾_{ID}+N⁽¹⁾_{ID}. In subsequent step S1025, the UE 20 decodes a PBCH. In other words, the UE 20 detects a DMRS (Demodulation Reference Signal) and decodes a MIB (Master Information Block). In subsequent step S1026, the UE 20 decodes an SIB. The SIB1 includes a RACH resource configuration, and the UE 20 determines a RACH resource and transmits a random access preamble to the gNB 10.

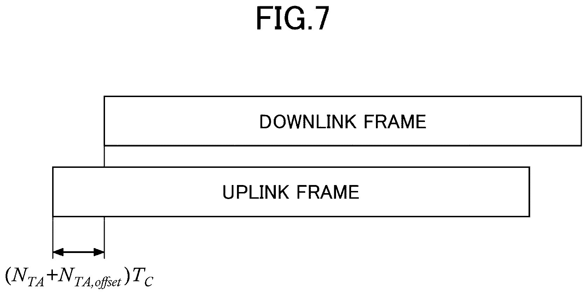

Fig. 7 is a drawing illustrating an example of a timing advance. As illustrated in Fig. 7, the TA is calculated by (N_{TA}+N_{TA,offset})*Tc. The N_{TA} is indicated by the TA command. The N_{TA,offset} is a fixed value defined in the technical specifications, and, for example, in NR, may be 25600 in a case of FDD or TDD without coexistence with LTE in FR1, may be 0 in a case of FDD with coexistence with LTE in FR1, may be 39936 in a case of TDD with coexistence with LTE in FR1, or may be 13792 in a case of FR2.

In a case of an RRC_IDLE or RRC_INACTIVE mode, the TA command is indicated by an RAR. In a case of an RRC_CONNECTED mode, the TA command is indicated by a MAC-CE. The indication of the TA command according to the MAC-CE may include 6 bits, and, for example, may indicate a value between -32 and +32. It is to be noted that the UE 20 is required to apply the TA value to a UL transmission 6 slots after the time point at which the TA value is received.

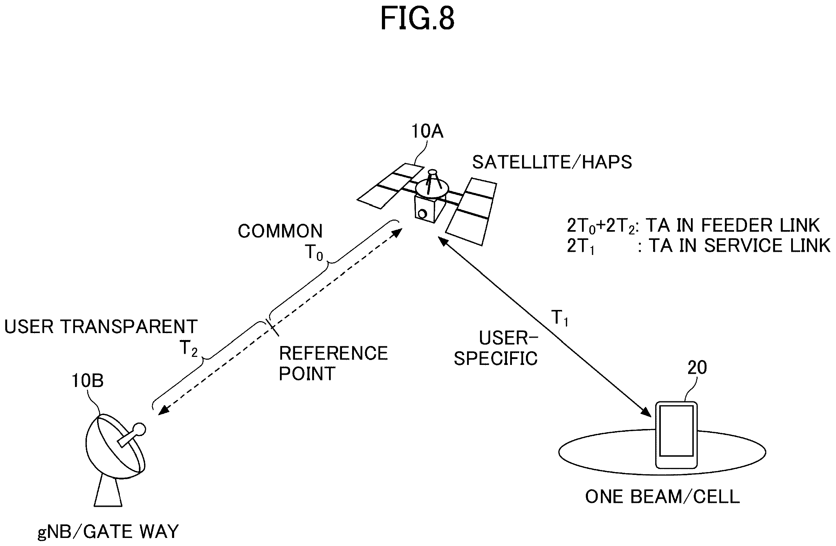

Fig. 8 is a drawing for describing an example of a timing advance in an NTN. As illustrated in Fig. 8, the TA in the NTN is a sum of the TA of the feeder link and the TA of the service link. The TA of the feeder link is a value corresponding to the RTD (Round trip delay)=2(T₀+T₂). The value corresponding to T₂ is compensated for by the network, and is a value transparent to users. The value corresponding to T₀ is a TA common to all users. It is to be noted that the reference point can be configured in the service link, and, in this case, the value corresponding to T₀ is a negative value.

The TA of the service link is a value corresponding to RTD=2Ti. The value corresponding to T₁ is a user-specific TA, and varies depending on the location of the UE 20.

The TA in the NTN may be calculated according to, for example, NTA=(N_{TA}+N_{TA,UE-specific}+N_{TA,common}+N_{TA,offset})*T_{C}. The N_{TA,common} is a TA common to all users. Hereinafter, the N_{TA,common} is also referred to as a common TA. The N_{TA,UE-specific} is a UE-specific TA. The N_{TA} is indicated by a TA command. The N_{TA,offset} is a fixed value defined in the technical specifications.

Here, it is necessary to determine what kind of parameters related to the common TA is to be broadcast and received by the UE 20 in the RRC_IDLE or RRC_INACTIVE state (that is, for example, in an operation for establishing the RRC connection). In addition, it is necessary to determine how parameters related to the common TA are to be indicated and received by the UE 20. For example, it is necessary to determine the type of signaling used for the indication and the granularity of the signaling.

In addition, it is necessary to determine what kind of parameters related to the common TA are to be broadcast and received by the UE 20 in the RRC_CONNECTED state. In addition, it is necessary to determine how the parameters related to the common TA are to be indicated and received by the UE 20. For example, it is necessary to determine the type of signaling used for the indication, the granularity of the signaling, and the periodicity of the signaling.

For example, the signaling used for indicating the parameter related to the common TA may be a SIB, RRC signaling, a MAC-CE, or DCI (Downlink Control Information). For example, the parameter related to the common TA may include a common TA value, may include a common TA value and a first order derivative, may include a common TA value, a first order derivative, and a second order derivative, or may include a common TA value, a first order derivative, a second order derivative, and a third order derivative. It is to be noted that the derivative may be a derivative with respect to the TA value, or may be a derivative with respect to the change of the TA value. For example, a validity timer that is to be started at the time when a parameter related to the common TA is newly obtained or a parameter that indicates a duration in which the parameter related to the common TA is valid may be configured. The validity timer specifies the timing at which the parameter related to the common TA is to be obtained again. For example, the granularity of the signaling of the common TA may be determined as described below.

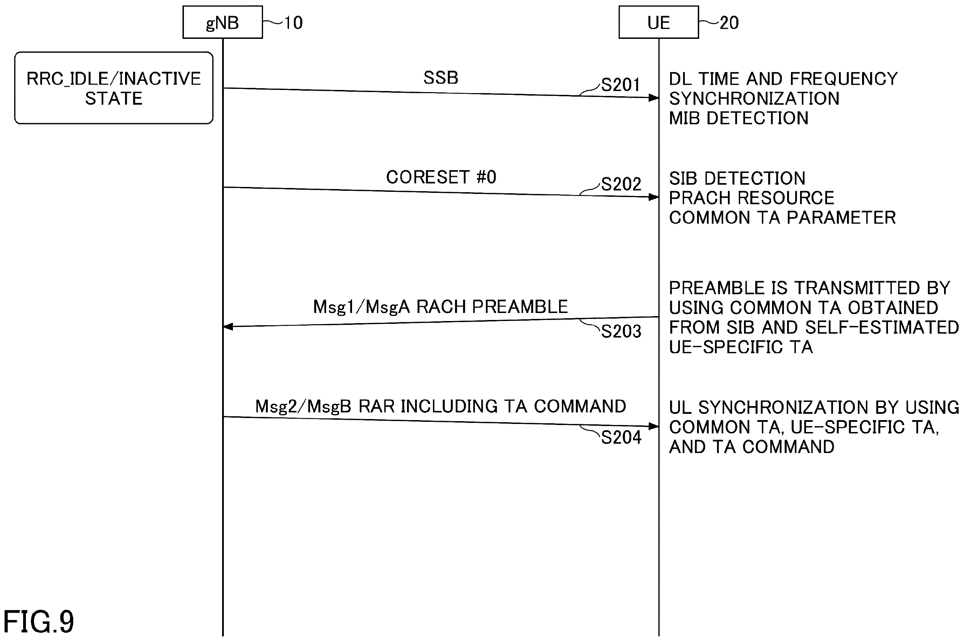

Fig. 9 is a sequence diagram illustrating an example of synchronization in an embodiment of the present invention. Fig. 9 illustrates an example in which synchronization is established between a gNB 10 and a UE 20 in an RRC_IDLE or RRC_INACTIVE state.

In step S201, the gNB 10 transmits an SSB to the UE 20. The UE 20 performs DL time and frequency synchronization and detects a MIB. In subsequent step S202, the gNB 10 transmits CORESET #0 to the UE 20. The UE 20 detects a SIB, based on the CORESET #0, and obtains parameters included in the SIB and related to PRACH resources and the common TA.

In subsequent step S203, the UE 20 transmits a RACH preamble as Msg1 or MsgA to the gNB 10, based on the common TA obtained from the SIB and the self-estimated UE-specific TA. In subsequent step S204, the gNB 10 transmits an RAR as Msg2 or MsgB to the UE 20, the RAR including a TA command. The UE 20 performs UL synchronization by using the common TA, the UE-specific TA and the TA command.

In a state of RRC_IDLE or RRC_INACTIVE, the TA may be calculated according to TA=the common TA+the UE-specific TA+the TA command included in the RAR as MSg2 or MsgB+TA offset defined depending on the frequency band, etc.

As illustrated in Fig. 9, the parameter related to the common TA may be indicated from the gNB 10 to the UE 20 via the SIB. The SIB may be a SIB1, or may be an SIBX other than the SIB1. In a case where the parameter related to the common TA is included in the SIBX other than the SIB1, the UE 20 may transmit a PRACH after reception of the SIBX. The SSB or the SIB1 may indicate information to the UE 20, the information indicating that the PRACH is to be not transmitted before reception of the SIBX or that the network is an NTN network. In addition, in a case where the parameter related to the common TA is included in the SIBX other than the SIB1, the default common TA value applied to the PRACH transmission may be assumed by the UE 20 in a state in which the SIBX has not been obtained.

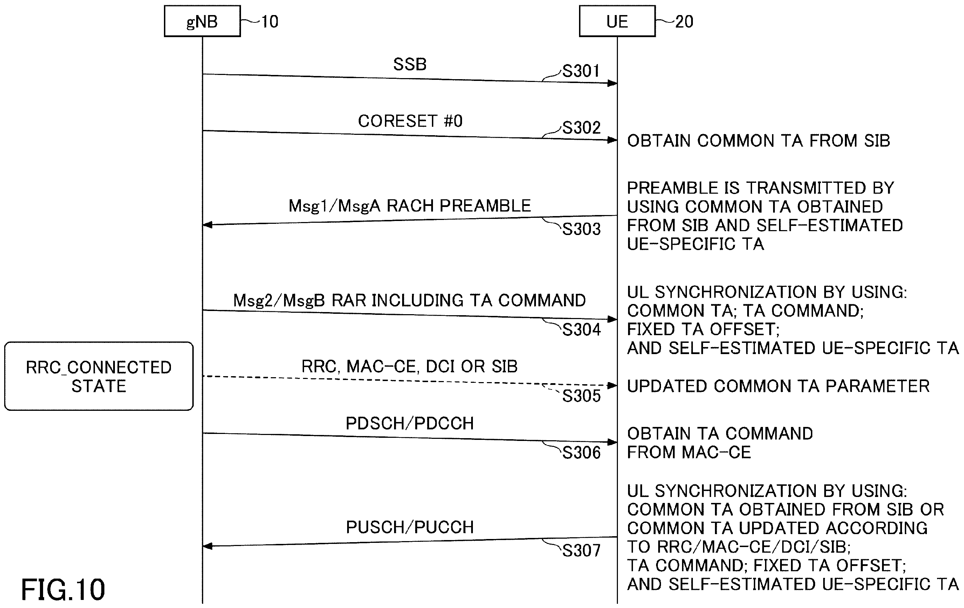

Fig. 10 is a sequence diagram illustrating an example of updating a TA in an embodiment of the present invention. In step S301, the gNB 10 transmits an SSB to the UE 20. The UE 20 performs DL time and frequency synchronization and detects a MIB. In subsequent step S302, the gNB 10 transmits CORESET #0 to the UE 20. The UE 20 detects a SIB, based on the CORESET #0, and obtains parameters included in the SIB and related to PRACH resources and the common TA.

In subsequent step S303, the UE 20 transmits a RACH preamble as Msg1 or MsgA to the gNB 10, based on the common TA obtained from the SIB and the self-estimated UE-specific TA. In subsequent step S204, the gNB 10 transmits an RAR as Msg2 or MsgB to the UE 20, the RAR including a TA command. The UE 20 performs UL synchronization by using the common TA, the UE-specific TA, and the TA command, and transitions to an RRC_CONNECTED state.

In step S305, the gNB 10 transmits an updated parameter related to the common TA to the UE 20 via RRC signaling, MAC-CE, DCI, or SIB. Here, the UE 20 is not required to update the TA and may use the parameter related to the common TA obtained from the SIB during the initial access. In addition, for example, the UE 20 may obtain the parameter related to the common TA via the SIB and may update the TA. In addition, for example, the UE 20 may obtain the parameter related to the common TA via RRC signaling, MAC-CE, and DCI, and may update the TA. The parameter related to the common TA obtained via RRC signaling, MAC-CE, and DCI may be a difference value with respect to the common TA parameter.

In step S306, the gNB 10 may transmit a PDSCH/PDCCH to the UE 20. The PDSCH/PDCCH may include a TA command. In step S307, the UE 20 may perform UL synchronization by using: the common TA obtained from the SIB or the common TA updated by RRC signaling/MAC-CE/DCI/SIB; the TA command; the fixed TA offset; and the self-estimated UE-specific TA, and may transmit a PUSCH/PUCCH to the gNB 10.

The common TA value, the 1st order derivative of common TA (that is, a drift rate), the 2nd order derivative of common TA, the 3rd order derivative of common TA, etc., may be used as the parameter related to the common TA. Hereinafter, the n-th order derivative of the common TA value may be also referred to as the n-th order derivative.

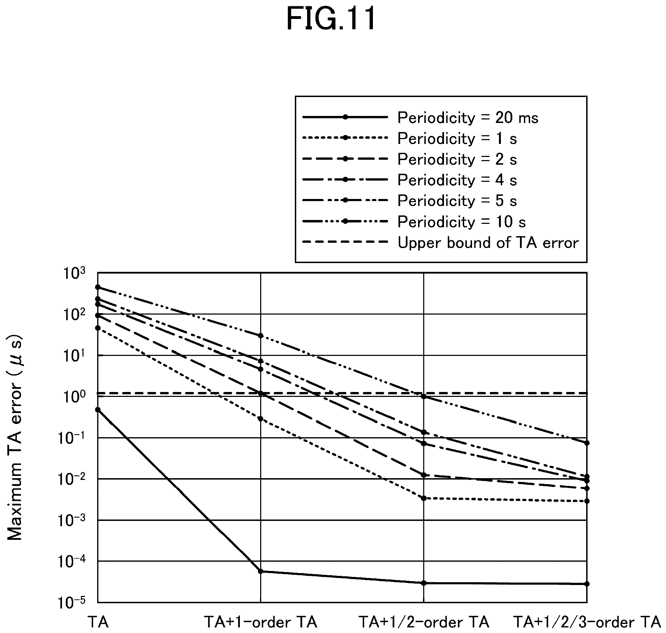

Fig. 11 is a drawing illustrating the relationship between the TA broadcasting periodicity and the TA error. Fig. 11 illustrates the maximum TA error rate in cases in which the update is performed in four ways of {common TA value}, {common TA value, first order derivative}, {common TA, first order derivative, second order derivative}, and {common TA, first order derivative, second order derivative, third order derivative} with a period of 20 ms, 1 s, 4 s, 5 s, and 10 s. It is to be noted that the upper boundary of the TA error is, for example, the CP length/4=1.17us in a case where the SCS is 15 kHz, and is illustrated by a broken line close to 10⁰µs of the upper boundary of TA error in Fig. 11.

As illustrated in Fig. 11, the maximum TA error decreases as the broadcasting periodicity becomes shorter. In addition, the maximum TA error decreases as the number of broadcasting parameters increases. The longer periodicity becomes available as the number of broadcasting parameters further increases.

Table 1 illustrates examples of the broadcasting parameter, the broadcasting periodicity, and the maximum TA error value.

**[Table 1]**

| Broadcast parameters | Broadcast periodicity | Maximum TA error |
|---|---|---|
| Common TA | 20 ms | 0.45 us |
| Common TA+first order derivative | 1 s | 0.29 us |
| Common TA+first order derivative+second order derivative | 5 s | 0.14 us |
| | 10 s | 1.022 us |

As illustrated in Table 1, in a case where the common TA value alone is broadcast at a 20 ms period, the maximum TA error is 0.45 µs, and satisfies the requirement related to the upper boundary of the TA error. In addition, in a case where the common TA value and the first order derivative are broadcast at a 1 s period, the maximum TA error is 0.29 µs, and satisfies the requirement related to the upper boundary of the TA error. In addition, in a case where the common TA value, the first order derivative, and the second order derivative are broadcast at a 5 s period, the maximum TA error is 0.14 µs, and satisfies the requirement related to the upper boundary of the TA error. In addition, in a case where the common TA value, the first order derivative, and the second order derivative are broadcast at a 10 s period, the maximum TA error is 1.022 µs, and satisfies the requirement related to the upper boundary of the TA error.

In a case where one or more parameters related to the common TA are broadcast according to the SIB, the parameters that are broadcast at a predetermined periodicity according to the SIB may support at least one of the options from option 1) to option 4) described below. It is to be noted that the options may be broadcast to UEs 20 in an RRC_IDLE or RRC_INACTIVE state, or may be broadcast to UEs 20 in an RRC_CONNECTED state. It is to be noted that one of the options may be defined as a default option.

Option 1) Common TA value
Option 2) Common TA value and first order derivative (or common TA drift rate)
Option 3) Common TA value, first order derivative, and second order derivative (or common TA drift change rate)
Option 4) Common TA value, first order derivative, second order derivative, and third order derivative

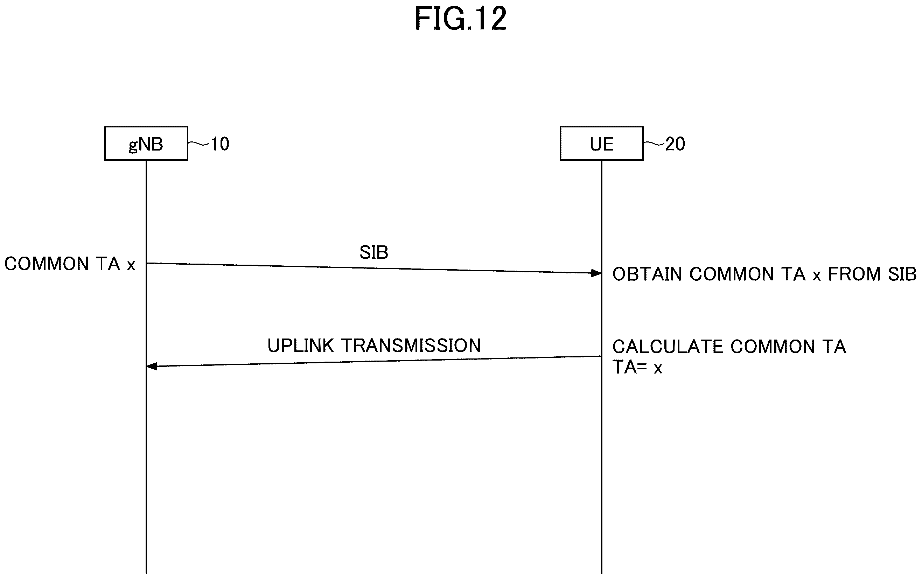

Fig. 12 is a drawing illustrating an example (1) of configuring a TA in an embodiment of the present invention. Fig. 12 corresponds to the above-described option 1. The gNB 10 transmits the common TA x to the UE 20 via a SIB. The UE 20 obtains the common TA x from the SIB, and calculates the common TA according to TA=x. The UE 20 performs uplink transmission by applying the calculated TA.

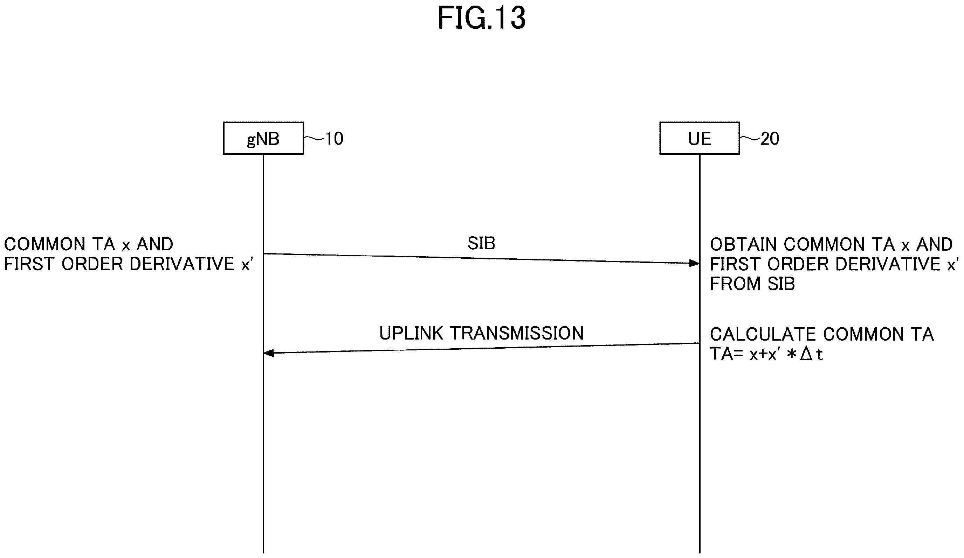

Fig. 13 is a drawing illustrating an example (2) of configuring a TA in an embodiment of the present invention. Fig. 13 corresponds to the above-described option 2. The gNB 10 transmits the common TA x and the first order derivative x' to the UE 20 via a SIB. The UE 20 obtains the common TA x and the first order derivative x' from the SIB, and calculates the common TA according to TA=x+x'*Δt. The UE 20 performs uplink transmission by applying the calculated TA.

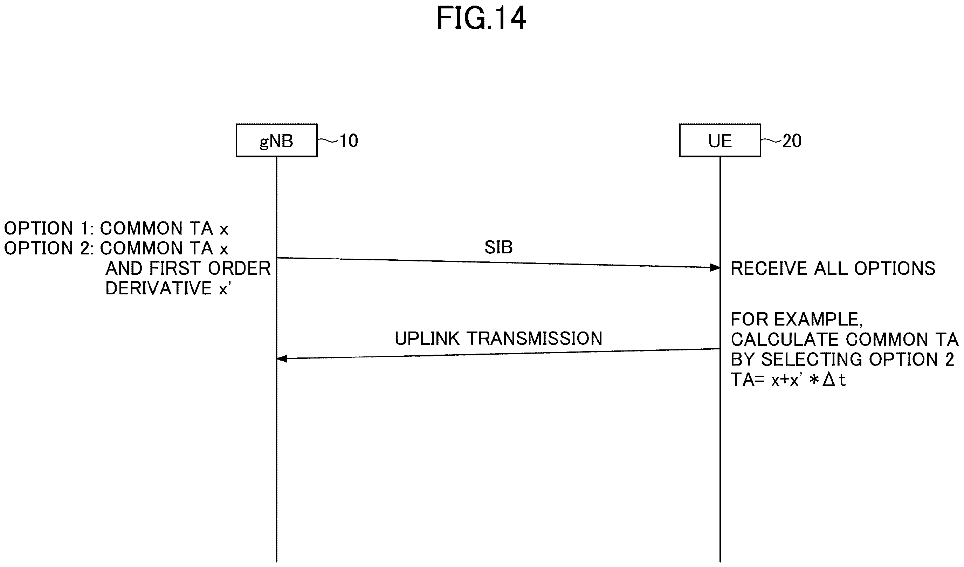

Fig. 14 is a drawing illustrating an example (3) of configuring a TA in an embodiment of the present invention. Fig. 14 corresponds to the above-described option 1 and the above-described option 2. The gNB 10 transmits the common TA x as the option 1, and transmits the common TA x and the first order derivative x' as the option 2 to the UE 20 via a SIB. The UE 20 obtains the common TA x and the first order derivative x' from the SIB. The UE 20 selects one of the options. In a case where the UE 20 selects the option 2, the UE 20 calculates the common TA according to TA=x+x'*Δt. The UE 20 performs uplink transmission by applying the calculated TA.

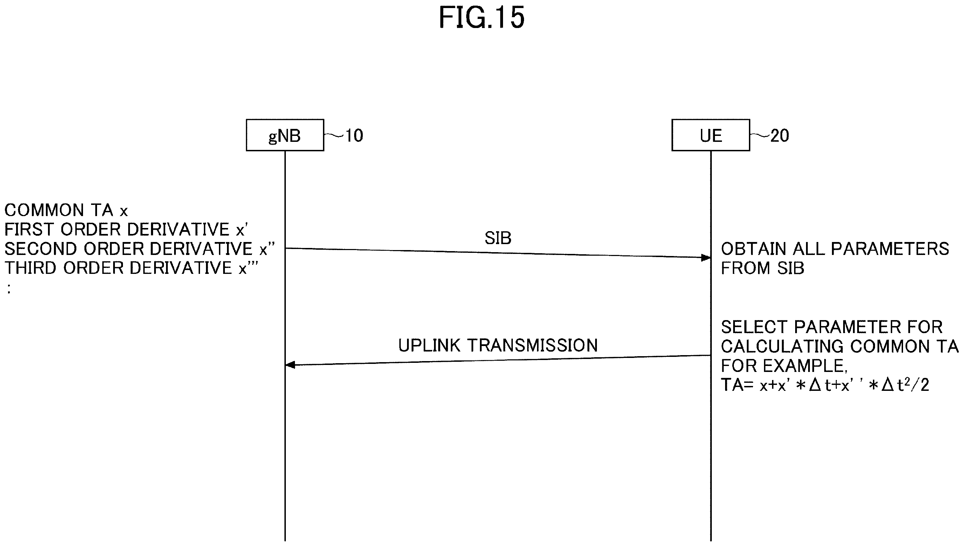

Fig. 15 is a drawing illustrating an example (4) of configuring a TA in an embodiment of the present invention. Fig. 15 corresponds to the above-described option 3. The gNB 10 transmits the common TA x, the first order derivative x', the second order derivative x", and configured parameters including derivatives of third order and higher to the UE 20 via a SIB. The UE 20 obtains all parameters from the SIB. For example, the UE 20 selects the common TA x, the first order derivative x', and the second order derivative x", and calculates the common TA according to TA=x+x'*Δt+x"*Δt²/2. The UE 20 performs uplink transmission by applying the calculated TA.

In addition, the above-described two or more options related to the parameters related to the common TA indicated at a predetermined periodicity may be supported. For example, the UE 20 may determine which option is to be selected based on the UE capability.

In addition, all candidates for parameters related to the common TA (for example, three parameters of the option 3) may be broadcast at a predetermined periodicity. The UE 20 may determine which parameters are to be used based on the UE capability.

In a case where one or more parameters related to the common TA are indicated via RRC signaling, MAC-CE, or DCI during the RRC_CONNECTED state, the parameters indicated via RRC signaling, MAC-CE, or DCI may support at least one of the options from option 1) to option 4) described below. It is to be noted that, in a case where two or more options are supported, new signaling indicating which option is to be used may be transmitted to the UE 20 via RRC signaling, MAC-CE, or DCI. It is to be noted that one of the options may be defined as a default option.

Option 1) Common TA value
Option 2) Common TA value and first order derivative (or common TA drift rate)
Option 3) Common TA value, first order derivative, and second order derivative (or common TA drift change rate)
Option 4) Common TA value, first order derivative, second order derivative, and third order derivative

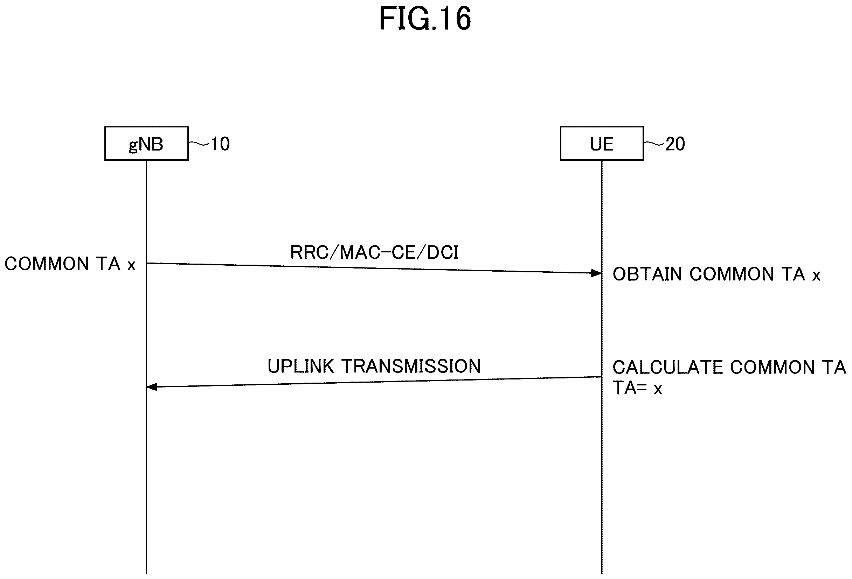

Fig. 16 is a drawing illustrating an example (5) of configuring a TA in an embodiment of the present invention. Fig. 12 corresponds to the above-described option 1. The gNB 10 transmits the common TAx to the UE 20 via RRC signaling, MAC-CE, or DCI. The UE 20 obtains the common TA x from RRC signaling, MAC-CE, or DCI, and calculates the common TA according to TA=x. The UE 20 performs uplink transmission by applying the calculated TA.

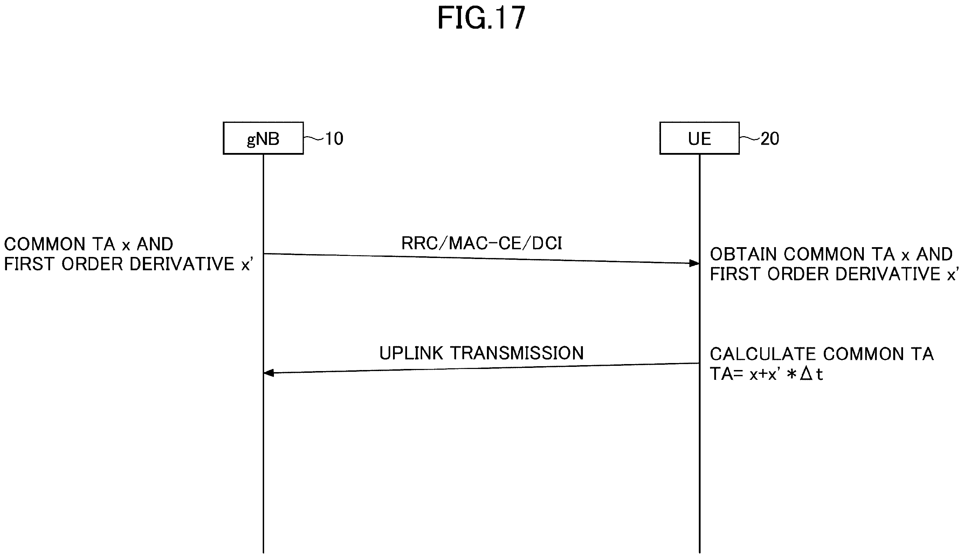

Fig. 17 is a drawing illustrating an example (6) of configuring a TA in an embodiment of the present invention. Fig. 17 corresponds to the above-described option 2. The gNB 10 transmits the common TA x and the first order derivative x' to the UE 20 via RRC signaling, MAC-CE, or DCI. The UE 20 obtains the common TA x and the first order derivative x' from RRC signaling, MAC-CE, or DCI, and calculates the common TA according to TA=x+x'*Δt. The UE 20 performs uplink transmission by applying the calculated TA.

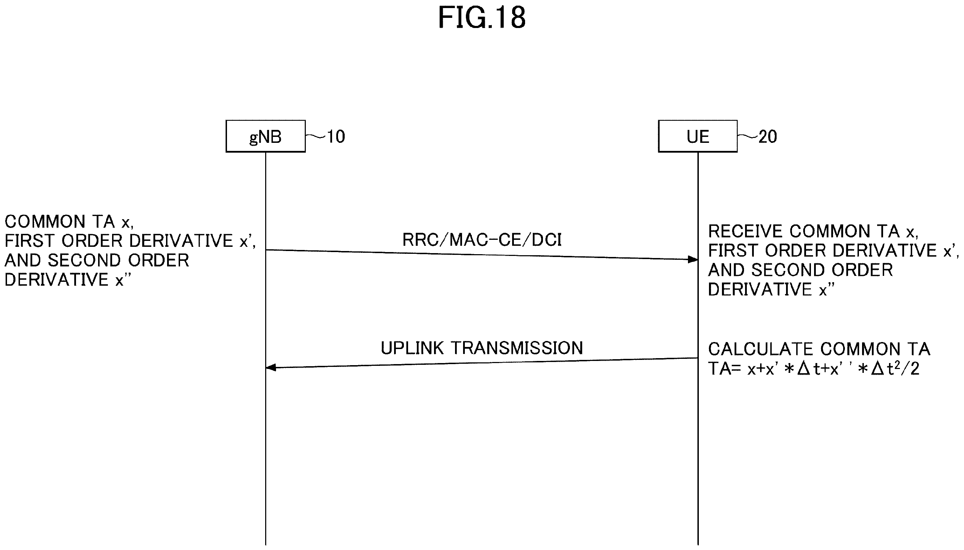

Fig. 18 is a drawing illustrating an example (7) of configuring a TA in an embodiment of the present invention. Fig. 18 corresponds to the above-described option 3. The gNB 10 transmits the common TA x, the first order derivative x', and the second order derivative x" to the UE 20 via RRC signaling, MAC-CE, or DCI. The UE 20 obtains the common TA x, the first order derivative x', and the second order derivative x" from RRC signaling, MAC-CE, or DCI. The UE 20 calculates the common TA according to TA=x+x'*Δt+x"*Δt²/2. The UE 20 performs uplink transmission by applying the calculated TA.

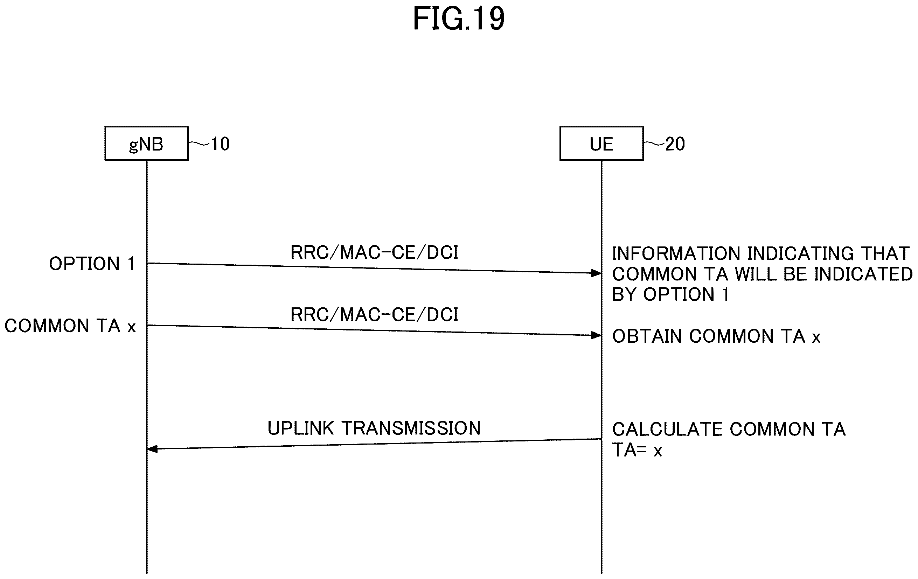

Fig. 19 is a drawing illustrating an example (8) of configuring a TA in an embodiment of the present invention. In Fig. 19, the gNB 10 transmits, to the UE 20, information indicating that the common TA is to be indicated by using the option 1, via RRC signaling, MAC-CE, or DCI. Subsequently, the gNB 10 transmits the common TA x to the UE 20 via RRC signaling, MAC-CE, or DCI. The UE 20 obtains the parameter related to the common TA by assuming the option 1, and calculates the common TA according to TA=x. The UE 20 performs uplink transmission by applying the calculated TA.

When parameters related to the common TA are broadcast via a SIB, two or more different periodicities may be assumed. For example, the periodicities may be 20 ms, 40 ms, 80 ms, 160 ms, 0.5 s, 1 s, 2 s, 5 s, 10 s, etc. The UE 20 in an RRC_IDLE or RRC_INACTIVE state in the NTN environment may assume that a default periodicity is to be used for an indication of parameters related to the common TA.

The default periodicity may be defined by technical specifications, and may be, for example, 20 ms, or may be the same as the SSB default periodicity. In addition, the default periodicity may be determined depending on the SSB periodicity. In addition, the periodicity for broadcasting the parameters related to the common TA via a SIB may be configured in the SIB to be indicated. Table 2 is an example in which the default periodicity for broadcasting the parameters related to the common TA is configured for each SSB periodicity.

**[Table 2]**

| SSB periodicity | Default periodicity of common TA parameters in SIB |
|---|---|
| 20 ms | 20 ms |
| 40 ms | 40 ms |
| 80 ms | 0.5 s |
| 160 ms | 1 s |

As illustrated in Table 2, the default periodicity for broadcasting the parameters related to the common TA may be associated with the SSB periodicity. When the SSB periodicity is 20 ms, the default periodicity for broadcasting the parameters related to the common TA may be 20 ms. In addition, when the SSB periodicity is 40 ms, the default periodicity for broadcasting the parameters related to the common TA may be 40 ms. In addition, when the SSB periodicity is 80 ms, the default periodicity for broadcasting the parameters related to the common TA may be 0.5 s. In addition, when the SSB periodicity is 160 ms, the default periodicity for broadcasting the parameters related to the common TA may be 1 s.

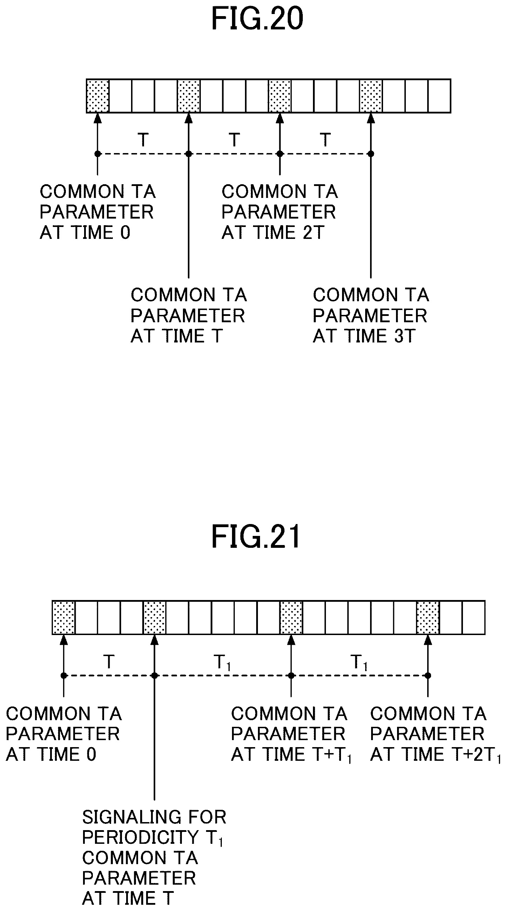

Fig. 20 is a drawing illustrating an example (1) of the TA broadcasting periodicity in an embodiment of the present invention. An example is illustrated in Fig. 20 in which the parameters related to the common TA via a SIB are indicated with a default periodicity T. In other words, the parameters related to the common TA are broadcast via a SIB at time 0, time T, time 2T, and time 3T.

In addition, when parameters related to the common TA are indicated via RRC signaling, MAC-CE, or DCI, two or more different periodicities may be supported. Information indicating which periodicity is to be used may be indicated to the UE 20 via RRC signaling, MAC-CE, or DCI as new signaling. The new signaling may be the same as the signaling for indicating the parameters related to the common TA. For example, the information indicating the parameters related to the common TA and the information indicating the periodicity may be assumed to be combined to be indicated. It is to be noted that a default periodicity for indicating the parameters related to the common TA may be defined. For example, the default periodicity may be defined by technical specifications.

In Fig. 20, the parameters related to the common TA may be indicated via RRC signaling, MAC-CE, or DCI by using one default periodicity T. In other words, the parameters related to the common TA are indicated via RRC signaling, MAC-CE, or DCI at time 0, time T, time 2T, and time 3T.

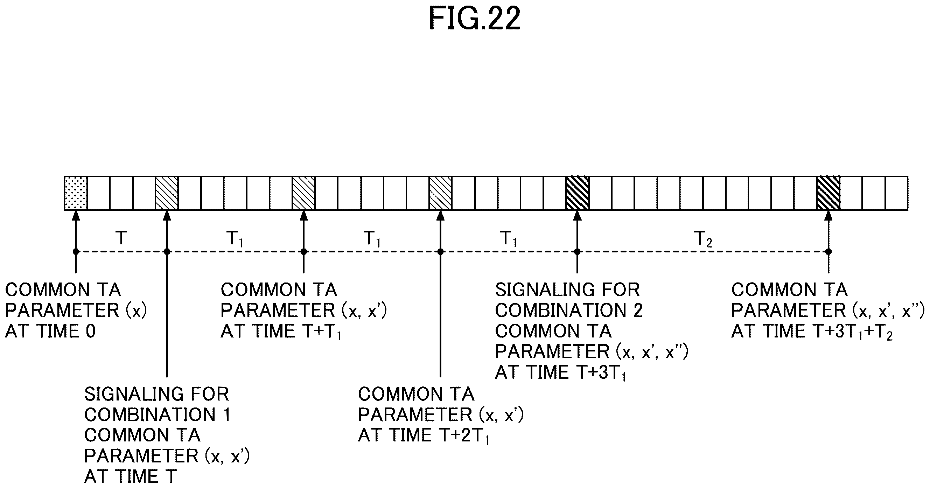

Fig. 21 is a drawing illustrating an example (2) of the TA broadcasting periodicity in an embodiment of the present invention. An example is illustrated in Fig. 22 in which the parameters related to the common TA are indicated via RRC signaling, MAC-CE, or DCI by using one default periodicity T and a periodicity T₁. At time T, signaling is performed to indicate the switching of the periodicity to the periodicity T₁. In other words, the parameters related to the common TA are indicated via RRC signaling, MAC-CE, or DCI at time 0, time T, time T+T₁, and time T+2T₁.

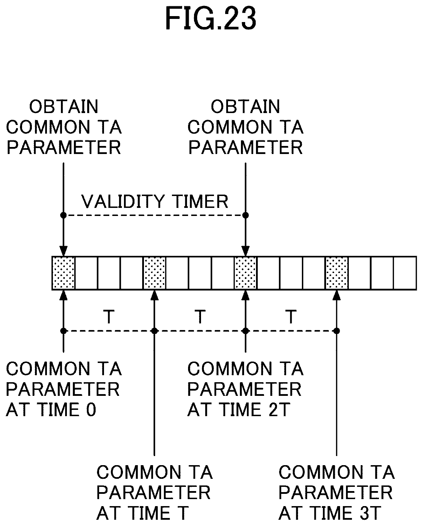

Fig. 22 is a drawing illustrating an example (3) of the TA broadcasting periodicity in an embodiment of the present invention. An example is illustrated in Fig. 23 in which the default {x}, {x, x'}, {x, x', x"} of the parameters related to the common TA; and information indicating a combination between information indicating the parameters related to the common TA and information indicating the periodicity, are indicated via RRC signaling, MAC-CE, or DCI at the one default periodicity T, the periodicity T₁, and the periodicity T₂. For example, T₁ may be equal to or greater than T, and T₂ may be equal to or greater than T₁.

As illustrated in Fig. 23, the default common TA parameter {x} is indicated at time 0. At the subsequent time T, the combination 1 is signaled to the UE 20. The combination 1 corresponds to a case of using the periodicity T₁ and {x, x'} as the parameters related to the common TA. At time T, {x, x'} is indicated. At the subsequent time T+T₁, {x, x'} is indicated. At the subsequent time T+2T₁, {x, x'} is indicated.

At the subsequent time T+3T₁, the combination 2 is signaled to the UE 20. The combination 2 corresponds to a case of using the periodicity T₂ and {x, x', x"} as the parameters related to the common TA. At time T+3T₁, {x, x', x"} is indicated. At the subsequent time T+3T₁+T₂, {x, x', x"} is indicated.

It is to be noted that a different periodicity may be configured in a case where the parameters related to the common TA are different. For example, in a case where a periodicity is configured, the UE 20 may assume that the parameters related to the common TA that are associated with the periodicity in advance are to be configured.

The conventional time alignment timer is a timer that defines a maximum time during which the UL synchronization can be maintained without receiving the TA command from the gNB 10. In response to the reception of the TA command via MAC, the UE 20 updates N_{TA}, and restarts the time alignment timer. In a case where the time alignment timer expires, the UE 20 assumes that the UL synchronization is lost.

Fig. 23 is a drawing illustrating an example (4) of the TA broadcasting periodicity in an embodiment of the present invention. As illustrated in Fig. 23, a validity timer may be defined that is to be started when the parameters related to the common TA are received and that defines the timing at which the parameters related to the common TA are to be obtained again. Alternatively, a time parameter indicating the time during which the parameters related to the common TA are valid may be defined. The validity time or the time parameter corresponds to: a period during which the common TA that satisfies the requirements related to the allowable error can be calculated; or a period during which the common TA enabled to perform UL synchronization can be calculated, based on the obtained parameters related to the common TA. The validity timer is to be started at the timing of receiving the parameters related to the common TA. In a case where the validity timer expires, the UE 20 may obtain new parameters related to the common TA via a SIB, RRC signaling, MAC-CE, or DCI. Alternatively, the UE 20 assumes that the parameters related to the common TA are valid during a period of the time parameter from the timing of receiving the parameters related to the common TA. The UE 20 may obtain new parameters related to the common TA via a SIB, RRC signaling, MAC-CE, or DCI in a case where at least the time of the time parameter has elapsed.

For example, the value of the validity timer expiration or the time parameter may be explicitly indicated by new signaling via a SIB, RRC signaling, MAC-CE, or DCI. In addition, the value of the validity timer expiration may be included and indicated in the signaling for the indication periodicity of the parameters related to the common TA. In addition, the value of the validity timer expiration may be included and indicated in the signaling for indicating options of the parameters related to the common TA.

In addition, the value of the validity timer expiration or the time parameter may be implicitly determined by the UE 20 according to the option of the parameters related to the common TA. For example, the UE 20 may determine that the value of the validity timer expiration is T₁ in a case of the above-described option 1, may determine that the value of the validity timer expiration is T₂ in a case of the above-described option 2, and may determine that the value of the validity timer expiration is T₃ in a case of the above-described option 3.

In addition, the value of the validity timer expiration or the time parameter may be implicitly determined by the UE 20 based on the periodicity with which the parameters related to the common TA are broadcast. For example, the UE 20 may determine that the value of the validity timer expiration is the same as the periodicity T with which the parameters related to the common TA are broadcast, or may determine that the value of the validity timer expiration is an integer multiple of the periodicity T.

Here, in 5G NR, the granularity of TA is 16*64/2µ*T_{C}. TC is 0.509 ns, and µ is a value that depends on the SCS. In NTN, the granularity of TA is required to be determined by taking into account the quantization performance of the parameters related to the common TA.

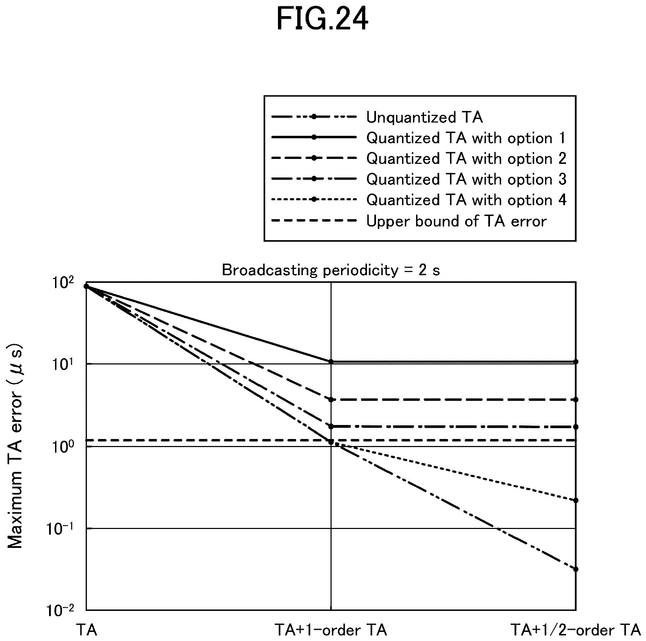

Fig. 24 is a drawing illustrating a relationship (1) between the granularity of configuring a TA and the TA error. The option 1 illustrated in Fig. 24 is an option in which the granularity is the same as that of N_{TA}, that is, 16*64/2^{µ}*T_{C}. The option 2 is an option in which the granularity is 4*64/2^{µ}*T_{C}. The option 3 is an option in which the granularity is 64/2^{µ}*T_{C}. The option 4 is an option in which the granularity is Tc. In Fig. 24, the granularity is the same for all parameters.

As illustrated in Fig. 24, in a case where the option is option 4 and TA, the first order derivative, and the second order derivative are indicated, the requirements related to the upper boundary of the TA error are satisfied.

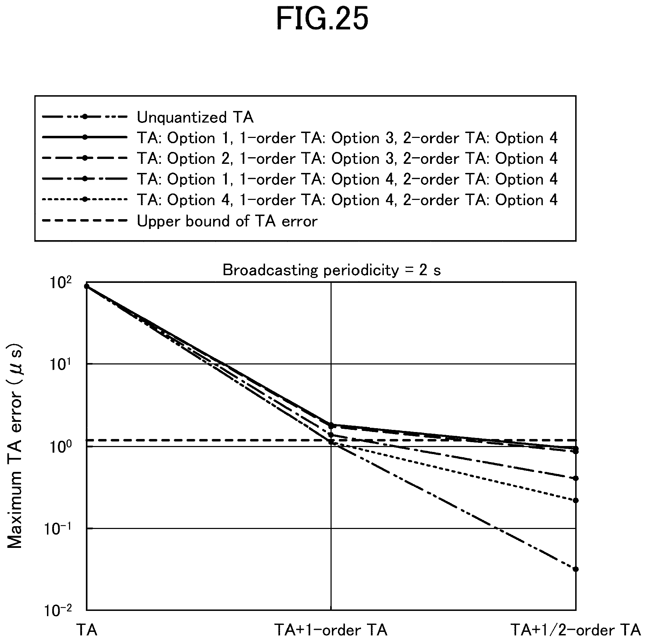

Fig. 25 is a drawing illustrating a relationship (2) between the granularity of configuring a TA and the TA error. In Fig. 25, the granularity is different depending on the parameter. Cases of four combinations with respect to {TA, first order derivative, second order derivative} and a case of TA that is not quantized are illustrated in the drawing. The four combinations include a combination of {option 1, option 3, option 4}, a combination of {option 2, option 3, option 4}, a combination of {option 1, option 4, option 4}, and a combination of {option 4, option 4, option 4} with respect to {TA, first order derivative, second order derivative}.

As illustrated in Fig. 25, the combination of {option 1, option 4, option 4} and the combination of {option 4, option 4, option 4} with respect to {TA, first order derivative, second order derivative} satisfy the requirements related to the upper boundary of the TA error. According to the combination of {option 1, option 4, option 4}, the payload for transmitting the parameters related to the common TA can be reduced as compared with the combination of {option 4, option 4, option 4}.

Therefore, by performing the quantization that varies among the plurality of parameters related to the common TA, the payload for the parameters can be reduced while satisfying the requirements related to the upper boundary of the TA error.

Therefore, one or more granularities may be applied to the parameters related to the common TA. The granularities of the common TA, the first order derivative, the second order derivative, etc., may be made coarse or may be made fine. For example, a coarse granularity may be applied to the common TA, a finer granularity may be applied to the first order derivative, and a finer granularity may be applied to the second order derivative.

For example, the granularity of the common TA may be determined to be 16*64/2^{µ}*T_{C} that is the same as that of 5G NR, may be determined to be coarser 32*64/2^{µ}*T_{C}, or may be determined to be a granularity that is coarser than 32*64/2^{µ}*T_{C}. For example, the granularity of the first order derivative may be determined to be 64/2^{µ}*T_{C}, or may be determined to be 1/2^{µ}*T_{C}. For example, the granularity of the second order derivative may be determined to be 1/2^{µ}*T_{C}.

It is to be noted that the granularity to be applied to the parameters related to the common TA may be associated with the periodicity with which the parameters related to the common TA are indicated. For example, the granularity may become finer as the periodicity becomes longer. It is to be noted that the combination of granularity applied to the parameters related to the common TA may be different in a case where the requirements related to the upper boundary of the TA error are different.

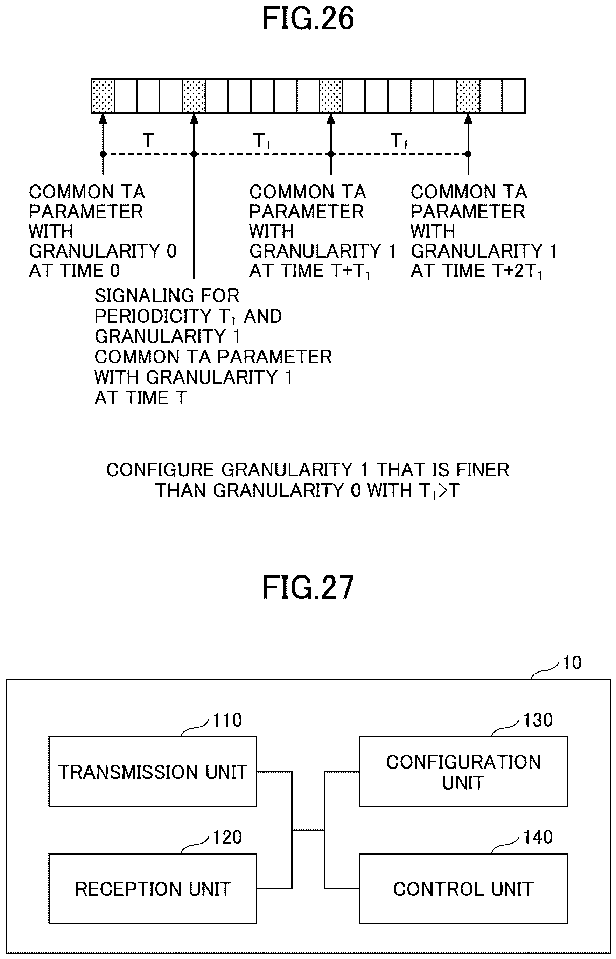

Fig. 26 is a drawing illustrating an example of changing the granularity of configuring a TA in an embodiment of the present invention. As illustrated in Fig. 26, the granularity 0 is applied to the parameters related to the common TA at time 0. At the subsequent time T, the periodicity T₁ and the granularity 1 are signaled. The granularity to be applied to the parameters related to the common TA is changed from the granularity 0 to the granularity 1. At the subsequent time T+T₁, the granularity to be applied to the parameters related to the common TA is the granularity 1. At the subsequent time T+2T₁, the granularity to be applied to the parameters related to the common TA is the granularity 1.

In addition, the periodicity for indicating the parameters related to the common TA, the option to be applied to the parameters related to the common TA, and the granularity to be applied to the parameters related to the common TA may be jointly coded, and then, may be signaled to the UE 20 via a SIB, RRC signaling, MAC-CE, or DCI. Table 3 illustrates examples of joint-coding.

**[Table 3]**

| Configuration # | Periodicity | Parameters | Granularity |
|---|---|---|---|
| 1 (Default configuration) | | | |
| 2 | | | |
| 3 | | | |
| 4 | | | |
| ... | | | |

As illustrated in Table 3, "periodicity", "parameter", and "granularity" may be associated with each other for each configuration index. The "periodicity" corresponds to a periodicity for indicating the parameters related to the common TA, the "parameter" corresponds to an option to be applied to the parameters related to the common TA, and the "granularity" corresponds to a granularity to be applied to the parameters related to the common TA.

It is to be noted that the UE capability indicating whether updating the common TA parameters via RRC signaling, MAC-CE, or DCI is to be supported may be defined. The UE capability indicating whether a plurality of options for the parameters related to the common TA are to be supported may be defined. The UE capability indicating whether applying different periodicities to different options for the parameters related to the common TA is to be supported may be defined. The UE capability indicating whether a validity timer for obtaining the new parameters related to the common TA is to be supported may be defined. The UE capability indicating whether applying a different quantization granularity to a different parameter related to the common TA is to be supported may be defined.

According to the above-described embodiments, in the NTN environment, the terminal 20 can perform UL synchronization by configuring the common TA in a manner in which the requirements related to the upper boundary of the TA error are satisfied.

In other words, TA (Timing Advance) can be configured appropriately in the wireless communication system.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

Fig. 27 is a drawing illustrating an example of a functional structure of a base station 10 according to an embodiment of the present invention. As shown in Fig. 27, the base station 10 includes a transmission unit 110, a reception unit 120, a configuration unit 130, and a control unit 140. The functional structure illustrated in Fig. 27 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to communications in NTN.

The control unit 140 performs control related to communications in NTN as described in the embodiments. Further, the control unit 140 controls communications with the terminal 20 based on the radio-parameter-related UE capability report that is received from the UE 20. The functional units related to signal transmission in the control unit 140 may be included in the transmission unit 110, and the functional units related to signal reception in the control unit 140 may be included in the reception unit 120.

### <Terminal 20>

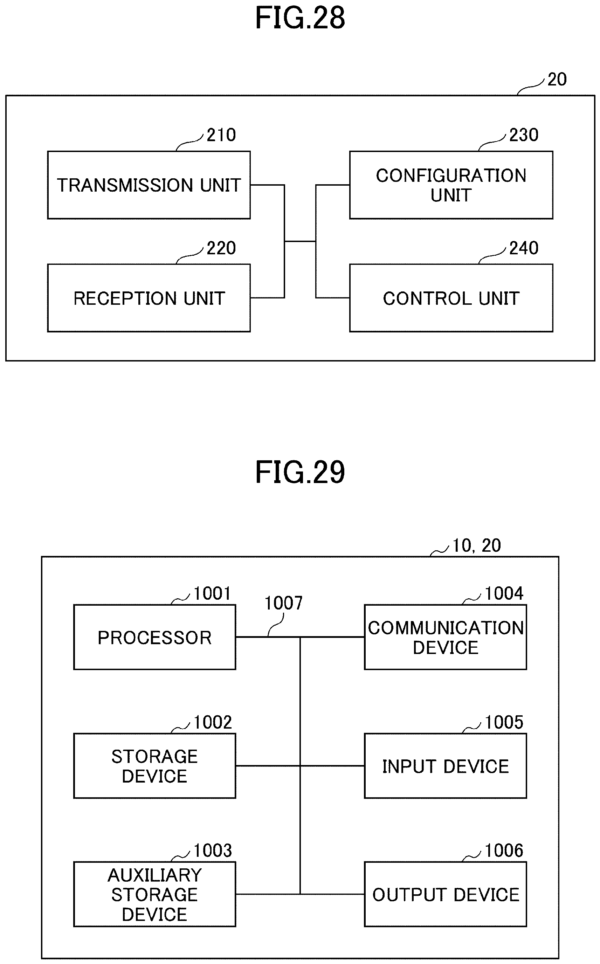

Fig. 28 is a drawing illustrating an example of a functional structure of a terminal 20 according to an embodiment of the present invention. As shown in FIG. 28, the terminal 20 includes a transmission unit 210, a reception unit 220, a configuration unit 230, and a control unit 240. The functional structure illustrated in Fig. 28 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 120 receives, from the another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to communications in NTN.

The control unit 240 performs control related to communications in NTN as described in the embodiments. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 27 and Fig. 28), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

For example, the base station 10, terminal 20, etc., according to an embodiment of the present disclosure may function as a computer for processing the radio communication method of the present disclosure. Fig. 29 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may be configured without including some of the devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 27 may be realized by control programs that are stored in the storage device 1002 and are executed by the processor 1001. Further, for example, the control unit 240 of the terminal 20 illustrated in Fig. 28 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to the disclosed technique, a terminal is provided. The terminal includes: a reception unit configured to receive a parameter related to a TA (Timing Advance) common to all users in a base station included in an NTN (Non-Terrestrial Network) and a TA command from the base station; and a control unit configured to calculate a common TA, based on the parameter, and to perform uplink synchronization, based on the TA command, the calculated common TA, a device-specific TA, and an offset. The reception unit receives the parameter at a period via at least one of SIB (System Information Block), RRC (Radio Resource Control) signaling, MAC-CE (Medium Access Control - Control Element) and DCI (Downlink Control Information).

According to the above-described configuration, in the NTN environment, the terminal 20 can perform UL synchronization by configuring the common TA in a manner in which the requirements related to the upper boundary of the TA error are satisfied. In other words, TA (Timing Advance) can be configured appropriately in the wireless communication system.

The parameter may include a TA value and one or more derivatives related to the TA value, the derivatives being up to a predetermined derivative order. According to the above-described configuration, in the NTN environment, the terminal 20 can perform UL synchronization by configuring the common TA in a manner in which the requirements related to the upper boundary of the TA error are satisfied.

The reception unit may receive the periodicity associated with the parameter from the base station. According to the above-described configuration, in the NTN environment, the terminal 20 can perform UL synchronization by configuring the common TA in a manner in which the requirements related to the upper boundary of the TA error are satisfied.

The control unit may start a timer at a time of reception of the parameter, the timer expiring at an integer multiple of the periodicity, and may obtain the parameter again when the timer expires. According to the above-described configuration, in the NTN environment, the terminal 20 can perform UL synchronization by configuring the common TA in a manner in which the requirements related to the upper boundary of the TA error are satisfied.

At least two different granularities may be applied to the TA value and the derivatives. According to the above-described configuration, in the NTN environment, the terminal 20 can reduce the payload related to the indication of the common TA, and perform UL synchronization by configuring the common TA in a manner in which the requirements related to the upper boundary of the TA error are satisfied.

In addition, according to an embodiment of the present invention, a communication method performed by a terminal is provided. The communication method includes: receiving a parameter related to a TA (Timing Advance) common to all users in a base station included in an NTN (Non-Terrestrial Network) and a TA command from the base station; calculating a common TA, based on the parameter, and performing uplink synchronization, based on the TA command, the calculated common TA, a device-specific TA, and an offset; and receiving the parameter at a period via at least one of SIB (System Information Block), RRC (Radio Resource Control) signaling, MAC-CE (Medium Access Control - Control Element) and DCI (Downlink Control Information).

According to the above-described configuration, in the NTN environment, the terminal 20 can perform UL synchronization by configuring the common TA in a manner in which the requirements related to the upper boundary of the TA error are satisfied. In other words, TA (Timing Advance) can be configured appropriately in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a reception unit configured to receive a parameter related to a TA (Timing Advance) common to all users in a base station included in an NTN (Non-Terrestrial Network) and a TA command from the base station; and
a control unit configured to calculate a common TA, based on the parameter, and to perform uplink synchronization, based on the TA command, the calculated common TA, a device-specific TA, and an offset, wherein
the reception unit receives the parameter at a period via at least one of SIB (System Information Block), RRC (Radio Resource Control) signaling, MAC-CE (Medium Access Control - Control Element) and DCI (Downlink Control Information).

2. The terminal as claimed in claim 1, wherein
the parameter includes a TA value and one or more derivatives related to the TA value, the derivatives including up to a derivative of a predetermined order.

3. The terminal as claimed in claim 1, wherein
the reception unit receives the period associated with the parameter from the base station.

4. The terminal as claimed in claim 1, wherein
the control unit starts a timer at a time of reception of the parameter, the timer expiring at an integer multiple of the period, and obtains the parameter again when the timer expires.

5. The terminal as claimed in claim 2, wherein
at least two different granularities are applied to the TA value and the derivatives.

6. A communication method performed by a terminal, the communication method comprising:
receiving a parameter related to a TA (Timing Advance) common to all users in a base station included in an NTN (Non-Terrestrial Network) and a TA command from the base station;
calculating a common TA, based on the parameter, and performing uplink synchronization, based on the TA command, the calculated common TA, a device-specific TA, and an offset; and
receiving the parameter at a period via at least one of SIB (System Information Block), RRC (Radio Resource Control) signaling, MAC-CE (Medium Access Control - Control Element) and DCI (Downlink Control Information).
